# EUROPÄISCHE PATENTSCHRIFT

(11) **EP 2 027 008 B1**
(45) Veröffentlichungstag und Bekanntmachung des Hinweises auf die Patenterteilung: **05.11.2014**
(21) Anmeldenummer: 07725909.1
(22) Anmeldetag: 08.06.2007
(51) Int. Cl.: B62D 65/02, B23K 37/04, B23K 101/00, B62D 65/18

(54) **BEARBEITUNGSSTATION, INSBESONDERE FÜGESTATION**
WORKING STATION, IN PARTICULAR ASSEMBLY STATION
STATION DE TRAVAIL, NOTAMMENT POSTE D'ASSEMBLAGE

(30) Priorität: 12.06.2006 DE 202006009312 U
(43) Veröffentlichungstag der Anmeldung: 25.02.2009
(73) Patentinhaber: KUKA Systems GmbH, 86165 Augsburg (DE)
(72) Erfinder: MAISCHBERGER, Johann, 86424 Dinkelscherben (DE); WIEDMEIER, Arthur, 86167 Augsburg (DE)
(74) Vertreter: Ernicke, Hans-Dieter
(86) Internationale Anmeldenummer: PCT/EP2007/005064
(87) Internationale Veröffentlichungsnummer: WO 2007/144114

(56) Entgegenhaltungen:
- EP-A- 1 277 540
- EP-A- 1 473 214
- EP-A- 1 518 784
- WO-A-01/94191
- WO-A-98/45085
- WO-A-98/45161
- DE-A1- 19 806 963
- DE-A1- 19 938 684

## Beschreibung

Die Erfindung betrifft eine Bearbeitungsstation, insbesondere eine Fügestation, mit den Merkmalen im Oberbegriff des Hauptanspruchs.

Eine solche Fügestation für Karosserieteile ist aus der WO 01/94191 A1 bekannt. Ein oder mehrere Industrieroboter sind auf einer gemeinsamen Fahrachse beidseits der Transferlinie zwischen einem Rahmenmagazin und einem Gestell mit einer Arbeitsstelle angeordnet. Sie haben eine Doppelfunktion als kombinierte Rahmenwechsel- und Bearbeitungseinrichtung. Sie bewirken den Austausch der Spannrahmen am Gestell und fügen nach einem Werkzeugwechsel auch die Werkstücke. Die Spannrahmen sind am Gestell höhenverstellbar gelagert und quer zur Transferlinie ausgerichtet.

Die EP 1 518 784 A2 zeigt eine andere Fügestation für Karosserieteile mit einem bodenseitigen umlaufenden Rahmen mit mehreren Dockingstationen, die jeweils zur bodenseitigen Aufnahme eines einzelnen stehenden und abgewinkelten Werkzeugarms mit mehreren Spannwerkzeugen dienen, der von der Dockingstation mit Betriebsmitteln versorgt wird. Die Werkzeugarme mit ihrer Dockingstation sind an dem Bodenrahmen mit Abstand voneinander angeordnet, wodurch Freiräume für den Durchgriff von Schweißrobotern gebildet werden. Die Roboter haben eine Doppelfunktion als kombinierte Werkzeugarmwechsel- und Bearbeitungseinrichtung.

Die EP 1 473 214 A1 offenbart unterschiedliche Fügestationen für Seitenwände und Dachteile von Fahrzeugkarosserien. Zum Fügen der Seitenwände sind mehrteilige Seitenrahmen auf Schlitten quer zur Transferlinie verfahrbar, wobei sie an einem Schweißroboter vorbeifahren. Zum Fügen der Dachteile sind beidseits der Transferlinie Portale angeordnet, auf deren Oberseite Roboter Spannbalken mit einer Ausrichtung quer zur Transferlinie auflegen.

Die WO 98/45085 A1 offenbart eine Fügestation mit einem portalartigen Stationsrahmen, an dem von stationären Zuführrobotern linke und rechte Seitenspannrahmen zugeführt und aufgehängt werden. Die Karosserie wird auf einer Werkstückaufnahme mit Steckdornen oder anderen Positioniermitteln gehalten.

Bei der EP 1 277 540 A2 ist zu beiden Seiten der Fahrzeugkarosserie jeweils ein modularer Seitenspannrahmen angeordnet, dessen Spannwerkzeuge an der Arbeitsstelle von einem Roboter einzeln ausgewechselt werden können.

Eine andere Bearbeitungsstation ist aus der EP 0 583 282 B1 bekannt. Sie weist ein portalartiges Gestell mit ein oder beidseits einer Transferlinie angeordneten Arbeitsstellen und ein oder mehrere neben der Arbeitsstelle angeordnete Rahmenmagazine auf, die als drehbares Trommelmagazin ausgebildet sind. Für den Spannrahmentransport zwischen den Rahmenmagazinen und der Arbeitsstelle am Gestell ist eine Rahmenwechseleinrichtung vorgesehen, die aus einem längs der Transferlinie verfahrbaren Hängezug und einem quer zur Transferlinie verfahrbaren Schlitten mit einem Gestell zur Spannrahmenaufnahme besteht. Die Spannrahmen werden vom Rahmenmagazin mit dem Hängezug an das Gestell transportiert, dort übergeben und dann weiter zum Gestell transportiert, wo sie mit einer Absteckung fixiert werden. Auf dem Schlitten sind hinter dem Gestell mehrere Bearbeitungsroboter, insbesondere Fügeroboter oder Schweißroboter, angeordnet.

Aus der EP 0 760 770 B1 ist eine Bearbeitungsstation bekannt, in der mehrere Roboter Spannrahmen an die Arbeitsstelle zuführen und zu einem kubischen Spannrahmengehäuse zusammenstecken und untereinander verbinden. Das Spannrahmengehäuse umschließt an mehreren Seiten die Karosserie. Im Spannrahmengehäuse stützen sich die Spannrahmen gegenseitig ab, wobei die Transportpalette die Transportkarosserie als Bodenteil des Spannrahmengehäuses fungiert.

Es ist Aufgabe der vorliegenden Erfindung, eine weiterentwickelte Spannrahmentechnik aufzuzeigen.

Die Erfindung löst diese Aufgabe mit den Merkmalen im Hauptanspruch.
Die beanspruchte Spannrahmen- und Handhabungstechnik und die Bearbeitungsstation haben den Vorteil einer hohen Flexibilität. Es kann eine Vielzahl unterschiedlicher Spannrahmen eingesetzt werden, die an verschiedene Werkstücktypen, insbesondere Karosserie- und Bauteiltypen, angepasst ist. Ein weiterer Vorteil liegt in den kurzen Rahmenwechselzeiten. Die verfügbare Taktzeit lässt sich dadurch unter Minimierung der Rüstzeiten besser ausnutzen. Dies führt zu einer besseren Stationsauslastung und einer höheren Wirtschaftlichkeit. Die Bearbeitungsstation hat außerdem nur einen geringen Platzbedarf und insbesondere eine geringe Stationsbreite, was sich ebenfalls in einer Steigerung der Wirtschaftlichkeit auswirkt.

Die Durchführung des Rahmenwechsels mit ein oder mehreren mehrachsigen Manipulatoren mit mehreren sich kreuzenden und z.B. orthogonalen Achsen, vorzugsweise mit Gelenkarmrobotern mit mindestens sechs Achsen, erlaubt eine Vereinfachung und Verkleinerung der Rahmenmagazine und der Speichertechnik. Die vorzugsweise schlanken und länglichen Spannrahmen können von den Manipulatoren gedreht und in einer aufrechten Position im Rahmenmagazin mittels geeigneter Rahmenhalter gespeichert werden. Dies verringert den Platzbedarf.

Für das Handling eines Spannrahmens genügt ein einzelner Manipulator. Durch die Mehrachsigkeit und den bevorzugten Einsatz einer mehrachsigen Manipulator- oder Roboterhand können die Spannrahmen auf engem Raum und in beliebigen geraden und/oder gekrümmten räumliche Bewegungsbahnen gehandhabt werden. Insbesondere kann bei der Zustellung des Spannrahmens an das Gestell und die dortige des Spannrahmens an das Gestell und die dortige Positioniereinrichtung eine mehrachsige Zustellbewegung, z.B. eine Zuführ- und Hebebewegung oder Einhängbewegung ausgeführt werden. Der Manipulator oder Roboter kann für den Rahmenwechsel seitlich versetzt neben der Arbeitsstelle stehen.

Über eine zusätzliche Bewegungsachse des oder der Manipulatoren kann außerdem deren Bewegungsbereich für den Spannrahmenwechsel erweitert und bei Bedarf die Magazingröße gesteigert werden. Durch die Speichertechnik und die Magazingestaltung können außerdem die Transportwege und die Rahmenwechselzeiten verkürzt werden. Die schlanke Spannrahmenform bietet ferner den Vorteil, dass am Gestell mehrere Spannrahmen bei Bedarf positioniert werden können. Die Spannrahmenfunktionen können hierbei geteilt werden, z.B. in einen unteren Schwellerbereich, in dem die Spanner an Spannrahmen oder stationär angeordnet sind. Im oberen Karosseriebereich kann die Spannfunktion durch einen dortigen Spannrahmen erfüllt werden.

Die Manipulatoren oder Handlingroboter übernehmen vorzugsweise die komplette Führung und Bewegung sowie Zustellung der Spannrahmen und haben hierfür mehrere Bewegungsachsen. Dies ermöglicht eine Vereinfachung der Rahmenmagazine, bei denen auf Bewegungsachsen verzichtet werden kann. Die Rahmenmagazine können hierdurch stationär ausgebildet und in Ständerbauweise ausgeführt sein. Dies verringert erheblich den Platzbedarf und den Bau- sowie Kostenaufwand. Außerdem lassen sich derartige Rahmenmagazine leichter an die jeweiligen Erfordernisse und Kapazitäten anpassen.

Die Handhabung der Spannrahmen durch ein oder mehrere Manipulatoren bietet weitere Vorteile. Einerseits kann die Positioniereinrichtung zur Positionierung und Fixierung der Spannrahmen in der Arbeitsstellung im Gestell vereinfacht, präzisiert und verbessert werden, wobei die Zuführkinematik einfacher und günstiger wird. Bei der Zuführung zum Gestell kann der Spannrahmen vom Manipulator auf einer beliebigen Bahn bewegt werden, wobei er auch gekippt oder geschwenkt werden kann. Dies ermöglicht eine Rahmenzustellung bei bereits positionierter Karosserie. Durch die Rahmenkinematik kann außerdem auf zusätzliche Bewegungsachsen für die Spanner am Spannrahmen verzichtet werden. Weitere Vorteile der Manipulatorführung der Spannrahmen ist eine Verbesserung der Energieversorgung der Spannrahmen und ein verringerter Platzbedarf im Bereich der Arbeitsstelle. Der Manipulator kann während des Bearbeitungsprozesses mit dem Spannrahmen verbunden bleiben, wobei durch die kleine Störkontur trotzdem eine gute Erreichbarkeit des Werkstücks bzw. der Karosserie durch die hinter dem Manipulator angeordnete Bearbeitungseinrichtung gegeben ist.

Die Spannrahmentechnik ermöglicht ferner eine Vereinfachung des Gestells der Bearbeitungsstation und eine Verringerung seiner Störkonturen in Verbindung mit einer besseren Erreichbarkeit des Werkstücks bzw. der Karosserie. Das Gestell kann im einfachen Fall von aufrecht und frei stehenden Säulen gebildet werden. Eine Portalform ist nicht erforderlich. Hierdurch ist im oberen Karosseriebereich die Zugänglichkeit wesentlich verbessert. Die Säulen können außerdem an einem Tragelement verstellbar gelagert sein und sich an unterschiedliche Platz- und Spannrahmenerfordernisse anpassen lassen.

Die beanspruchte Bearbeitungsstation kann in ihren wesentlichen Komponenten modular aufgebaut sein, wobei auch ein Baukastensystem gebildet werden kann. Die Rahmenmagazine können ein einfachen und modularen Stahlbau haben und beliebig linear oder im Bogen um die

Bewegungsachse der Rahmenwechseleinrichtung angeordnet sein. Hierdurch ist die Integration neuer Spannrahmentypen jederzeit möglich. Auch die Wartung und Instandhaltung der Spannrahmen wird vereinfacht und verbessert. Das modulare Konzept oder Baukastenprinzip steigert die Wirtschaftlichkeit und vereinfacht die Planung und Auslegung von Bearbeitungsstationen. Zudem wird die Flexibilität gesteigert, weil sich die Bearbeitungsstation einer Änderung der Werkstücktypen oder Karosserietypen mit einem vergleichsweise geringem Aufwand anpassen lässt. Die von ein oder mehreren Manipulatoren gebildete Rahmenwechseleinrichtung mit der ggf. vorhandenen zusätzlichen Bewegungsachse bietet für die Flexibilisierung mannigfaltige Möglichkeiten.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine perspektivische Ansicht einer Bearbeitungsstation mit zwei Rahmenmagazinen, mehreren Spannrahmen und einer Rahmenwechseleinrichtung,
- Figur 2:: eine andere perspektivische Ansicht gemäß Pfeil II von Figur 1,
- Figur 3:: eine Seitenansicht der Bearbeitungsstation gemäß Pfeil III von Figur 1,
- Figur 4 und 5:: Schnitte durch die Bearbeitungsstation gemäß Schnittlinie IV-IV und V-V von Figur 3,
- Figur 6:: eine Draufsicht auf eine Variante der Bearbeitungsstation mit einer anderen Magazingestaltung,
- Figur 7:: eine weitere Stationsvariante in Draufsicht,
- Figur 8 bis 10:: vergrößerte Detaildarstellungen von Elementen einer Positioniereinrichtung in den Ausschnitten VIII - X von Figur 7,
- Figur 11:: eine Seitenansicht einer Arbeitsstelle der Bearbeitungsstation mit dem Gestell und einem dort positionierten Spannrahmen sowie gestellseitigen Spannern,
- Figur 12:: eine Variante der Anordnung von Figur 11 mit zwei Spannrahmen,
- Figur 13:: eine weitere Variante mit einem anderen im Gestell positionierten Spannrahmen und
- Figur 14 bis 16:: einen schlanken Spannrahmen in Seitenansicht, Draufsicht und geklappter Stirnansicht.

Die Erfindung betrifft eine Spannrahmentechnik und eine damit ausgerüstete Bearbeitungsstation (1).

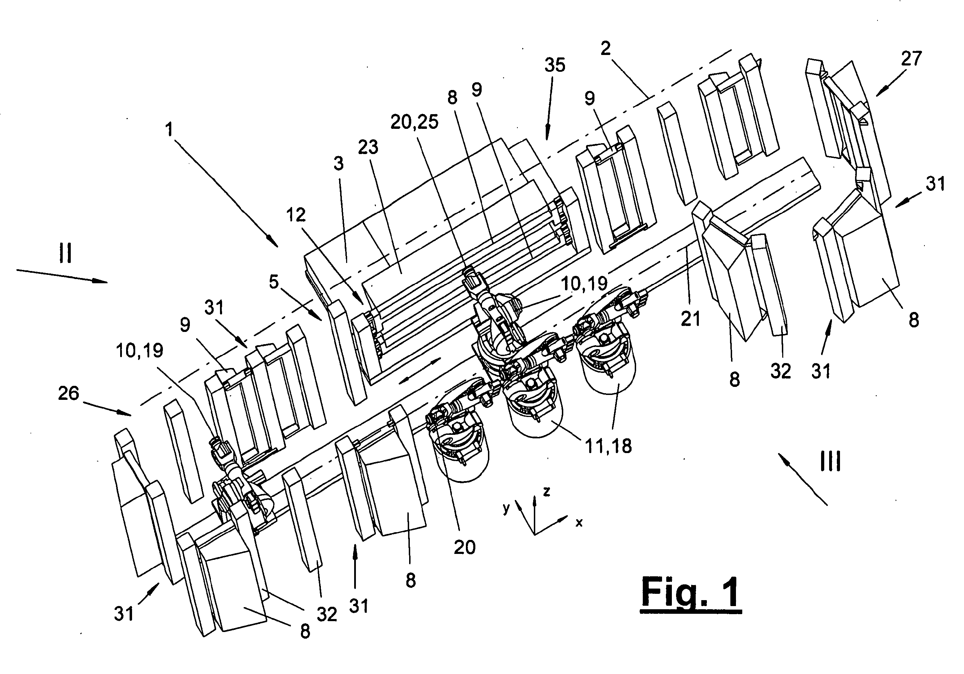

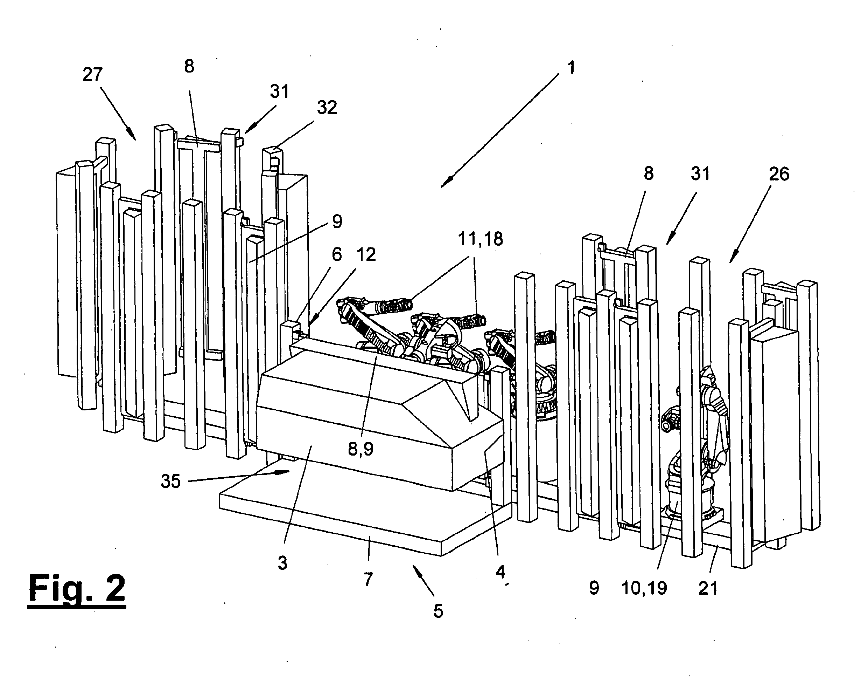

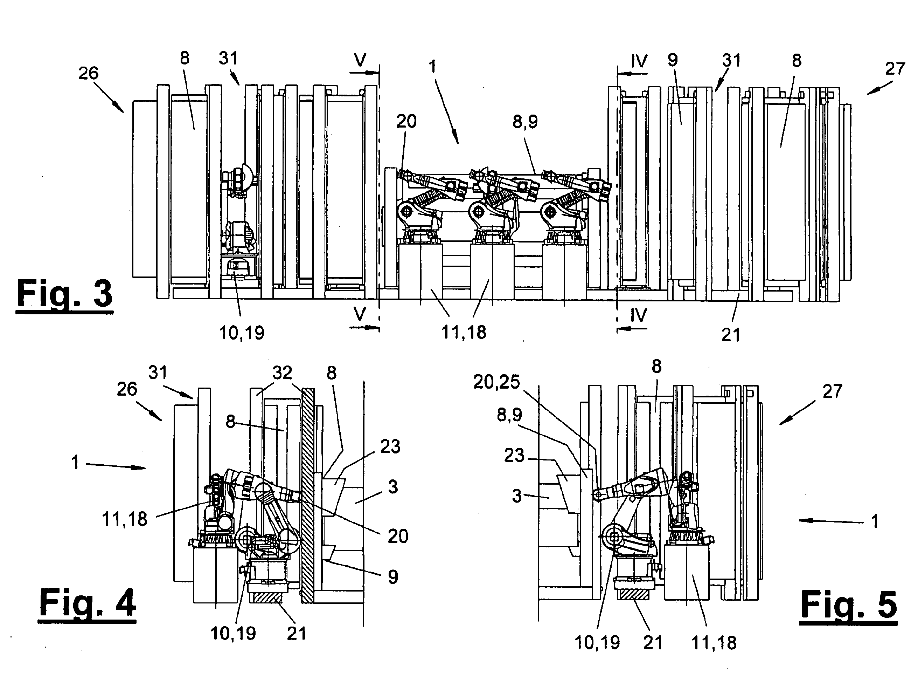

In Figur 1 bis 5 ist eine Bearbeitungsstation (1) in verschiedenen Ansichten dargestellt. Hierbei ist aus Übersichtsgründen jeweils nur eine Stationshälfte dargestellt.

Die Bearbeitungsstation (1) ist für beliebige Bearbeitungsprozesse an beliebigen Werkstücken (3) vorgesehen, die z.B. entlang einer durch die Station sich erstreckenden Transferlinie (2) mit geeigneten Förderern zugeführt werden. In der gezeigten Ausführungsform handelt es sich bei den Werkstücken (3) um Fahrzeugkarosserien, insbesondere Rohkarosserien. In der Bearbeitungsstation (1) werden Fügevorgänge an der Karosserie (3) durchgeführt, wobei mittels ein oder mehrerer Spannrahmen (8,9) die Karosserie (3) oder ein oder mehrere Bauteile (4) der Karosserie (3), z.B. eine Seitenwand, an der Arbeitsstelle (35) gespannt und verbunden werden. Ggf. können Bauteile (4) auch mit dem oder den Spannrahmen (8,9) zur Arbeitsstelle (35) zugeführt werden. Die Fügeprozesse zur Verbindung der Bauteile oder Karosserieteile können von beliebiger Art sein, z.B. Schweißen, Kleben, Löten oder dergl..

Die Karosserie (3) wird in der Bearbeitungsstation (1) an der Arbeitsstelle (35) in geeigneter Weise genau positioniert, so dass eine exakte Ausrichtung zwischen der Karosserie (3) und dem oder den Spannrahmen (8,9) gegeben ist. Die in den Zeichnungen dargestellten Bestandteile der Bearbeitungsstation (1) können nur auf einer Seite oder alternativ auf beiden Seiten der Transferlinie (2) für eine ein- oder beidseitige Bearbeitung der Fahrzeugkarosserie (3) angeordnet sein.

Die Bearbeitungsstation (1) weist ein Gestell (5) auf, an dem die Spannrahmen (8,9) an der Arbeitsstelle (35) mittels einer Positioniereinrichtung (12) exakt positioniert und fixiert werden können. Die Bearbeitungsstation (1) ist z.B. als Fügestation, insbesondere als sogenannte Geostation ausgestaltet, in der die Karossierteile genau zueinander ausgerichtet und für den Bearbeitungsprozess gespannt werden.

Das Gestell (5) kann in beliebiger Weise ausgebildet sein. In der gezeigten und bevorzugten Ausführungsform besteht es aus zwei oder mehr frei und aufrecht stehenden Stützsäulen (6), an denen die Spannrahmen (8,9) positioniert und fixiert werden. Bei einer beidseitigen Stationsausbildung sind vier im Rechteck verteilte Stützsäulen (6) vorhanden. Die Stützsäulen (6) sind bodenseitig in geeigneter Weise zur Aufnahme der Spann- und Positionierkräfte abgestützt. Die Abstützung kann starr oder verstellbar sein. Die Stützsäulen (6) können am Stationsboden oder Hallenboden verankert sein. Alternativ können sie an einem Tragelement (7), z.B. einer Bodenplatte angeordnet und befestigt sein. Die Säulenanordnung kann nach ein oder mehreren Richtungen, z.B. in der x- und/oder y-Achse, verstellbar sein, wobei z.B. ein Verstellraster vorhanden ist. Hierüber kann insbesondere der Abstand in x-Richtung zwischen den Stützsäulen (6) zur Anpassung an unterschiedliche Spannrahmengrößen verändert werden.

Die Bearbeitungsstation (1) weist neben der oder den Arbeitsstellen (35) ein oder mehrere Magazine (26,27) für jeweils ein oder mehrere Spannrahmen (8,9) auf. Ferner ist eine Rahmenwechseleinrichtung (10) vorgesehen, mit der die Spannrahmen (8,9) getauscht und von den Rahmenmagazinen (26,27) zur Arbeitsstelle (35) und zurück transportiert werden können.

Die Rahmenwechseleinrichtung (10) weist ein oder mehrere mehrachsige Manipulatoren (19) auf, welche die verschiedenen Spannrahmen (8,9) handhaben und mehrachsig führen können. Die Manipulatoren (19) können in beliebig geeigneter Weise ausgebildet sein. Sie haben vorzugsweise mehrere, z.B. fünf oder mehr sich kreuzende Bewegungsachsen, die z.B. orthogonal zueinander ausgerichtet sind. Dies können rotatorische und/oder translatorische Achsen sein. Im gezeigten Ausführungsbeispiel sind sie als mehrachsige, insbesondere sechsachsige Gelenkarmroboter oder sog. Handlingroboter ausgebildet. Sie weisen ein um eine z.B. vertikale Achse auf einem Gestell drehbares Karussell, eine hieran um z.B. eine Horizontalachse schwenkbare Schwinge und einen am Schwingenende wiederum z.B. horizontal schwenkbar gelagerten Ausleger auf. Der Manipulator (19) besitzt eine mehrachsige Roboterhand (20) mit z.B. zwei oder drei Achsen, die z.B. am Auslegerende angeordnet ist.

Die Roboterhand (20) kann eine geeigneten Wechselkupplung tragen, die mit einer Dockingeinrichtung (25) an den Spannrahmen (8,9) in lösbaren Eingriff treten kann. Über die Wechselkupplung und die Dockingeinrichtung (25) können mittels geeigneter Leitungen und Kupplungselemente Betriebsmittel, z.B. Druckluft, Leistungsstrom, Kühlmittel oder dergl. zugeführt werden. Außerdem können Steuersignale von einer Steuerung, z.B. einer Stations- und/oder Robotersteuerung, übermittelt werden. Die Energie- und Signalversorgung der Spannrahmen (8,9) kann auch auf andere Weise geschaffen werden, z.B. über geeignete Kupplungen und Anschlüsse am Gestell (5), die bei einer Rahmenpositionierung automatisch geschlossen und beim Rahmenwechsel wieder geöffnet werden.

Der oder die Manipulatoren (19) weisen eine oder mehrere zusätzliche Bewegungsachsen (21) auf. Dies kann z.B. eine gerade oder gebogene Fahrachse oder siebte Achse der Roboter (19) sein, die ggf. parallel zur Transferlinie (2) ausgerichtet ist und auf ein oder beiden Seiten der Transferlinie (2) angeordnet ist. Auf der zusätzlichen Bewegungsachse (21) können sich die Manipulatoren (19) für den Spannrahmentransport zwischen der Arbeitsstelle (35) und dem oder den Rahmenmagazinen (26,27) hin und her bewegen. Die zusätzliche Bewegungsachse (21) kann alternativ zum gezeigten Ausführungsbeispiel durch einen Förderer oder eine andere Transporteinrichtung gebildet werden. Sie muss auch nicht linear verlaufen. Als zusätzliche Achse kann z.B. ein Schwingensystem dienen.

In den gezeigten Ausführungsbeispielen sind im Arbeitsbereich der Station (1) die Manipulatoren (19) erfindungsgemäß zwischen der Arbeitsstelle (35) bzw. dem Gestell (5) und einer Bearbeitungseinrichtung (11) angeordnet. Die zusätzliche Bewegungsachse (21) verläuft ebenfalls in einem Bereich zwischen dem Gestell (5) und der Bearbeitungseinrichtung (11).

Die Bearbeitungseinrichtung (11) kann ein oder mehrere mehrachsige Manipulatoren (18) mit Bearbeitungswerkzeugen aufweisen. Dies können z.B. Fügeroboter, insbesondere Schweißroboter sein. Diese Roboter können ebenfalls als sechsachsige Gelenkarmroboter ausgestaltet sein und ggf. auf Sockeln oder mit Zusatzachsen angeordnet sein. Die Reichweite der Fügeroboter (18) und deren Beweglichkeit ist so groß, dass sie die Karosserie (3) an der Arbeitsstelle (35) erreichen können und sich dabei an dem ggf. an der Arbeitsstelle (35) stehenden Handlingroboter (19) vorbeibewegen können. In Ruhestellung geben die Fügeroboter (18) den Fahrweg und sonstigen Bewegungsraum für den Handlingroboter (19) beim Rahmenwechsel frei.

Der Handlingroboter (19) kann während der Bearbeitung von dem oder den Spannrahmen (8,9) gelöst und von der Arbeitsstelle (35) entfernt werden. Alternativ kann er mit dem oder den Spannrahmen (8,9) verbunden bleiben und an der Arbeitsstelle (35) verharren.

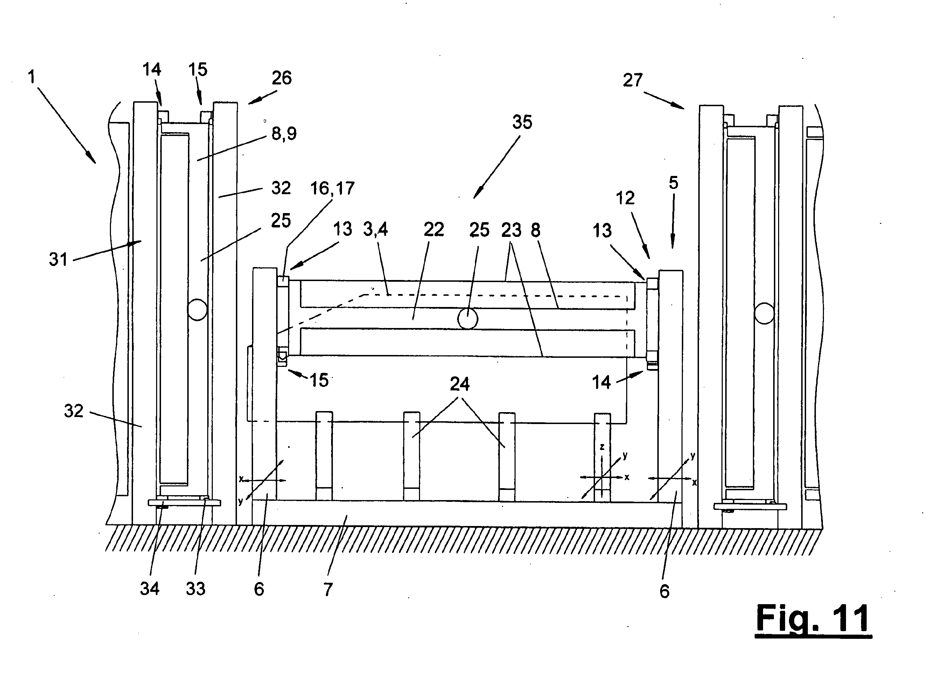

Figur 11 bis 16 zeigen verschiedene Varianten von Spannrahmen (8,9) in verschiedenen Ansichten und Positionen am Gestell (5). Die Spannrahmen (8,9) sind mit ein oder mehreren Spannern (23) ausgerüstet, mit denen die Karosserieteile gespannt werden können. Die beweglichen Spannerelemente können in beliebig geeigneter Weise angetrieben werden. Die Energieversorgung kann in der vorerwähnten Art über die Dockingeinrichtung (25), die z.B. als Energie- und Wechselkupplung ausgebildet ist oder auf andere Weise über geeignete Anschlüsse im Gestell (5) erfolgen. Die Spanner (23) können insbesondere selbst verriegelnde Antriebe, z.B. Kniehebelantriebe, haben, welche die beweglichen Spannerteile in der Spannposition festhalten. Die Selbstverriegelung ermöglicht nach der Spannrahmenpositionierung ein Trennen der Energieversorgung und erlaubt ein Lösen des Handlingroboters (19) vom Spannrahmen (8,9). Der Handlingroboter (19) kann dann die Arbeitsstelle (35) verlassen und den Zugang für die Bearbeitungseinrichtung (11) vollständig frei machen.

Die Spannrahmen (8,9) können eine längliche und schmale oder schlanke Form aufweisen. Sie können z.B. in den Varianten von Figur 11, 12 und 14 bis 16 einen balkenartigen Träger (22) aufweisen, der z.B. im wesentlichen eine I-Form hat. Die Spannrahmen (8,9) werden am Gestell (5) vorzugsweise mit einer im wesentlichen horizontalen Ausrichtung positioniert, wobei sich der Träger (22) horizontal und parallel zur Transferlinie (2) erstreckt. An den Trägerende sind quer stehende und in der Gestellposition aufrechte Trägerarme angeordnet, die am Ende Zentrierelemente (17) für die nachfolgend erläuterte Positioniereinrichtung (12) tragen.

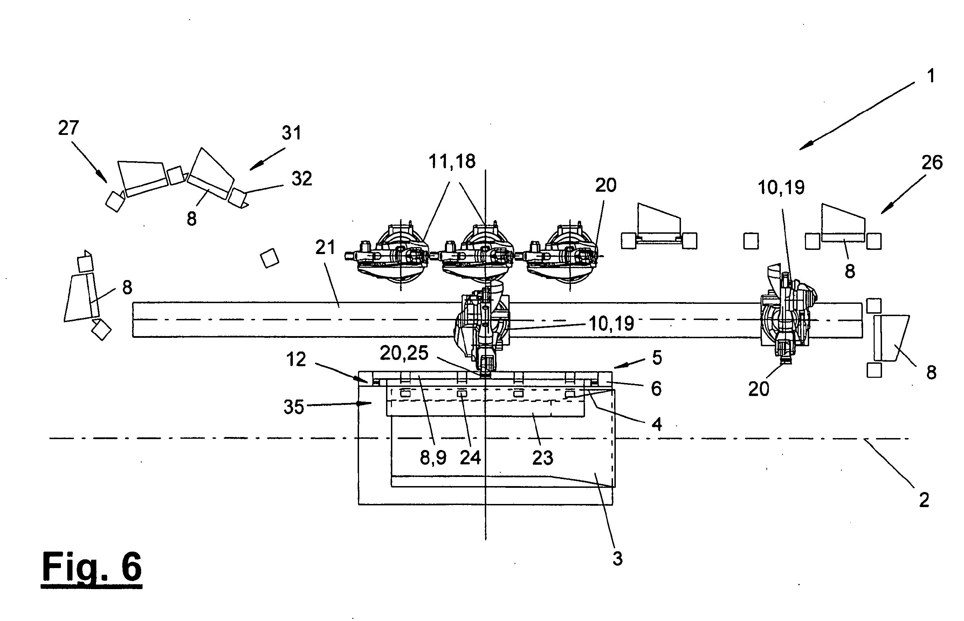

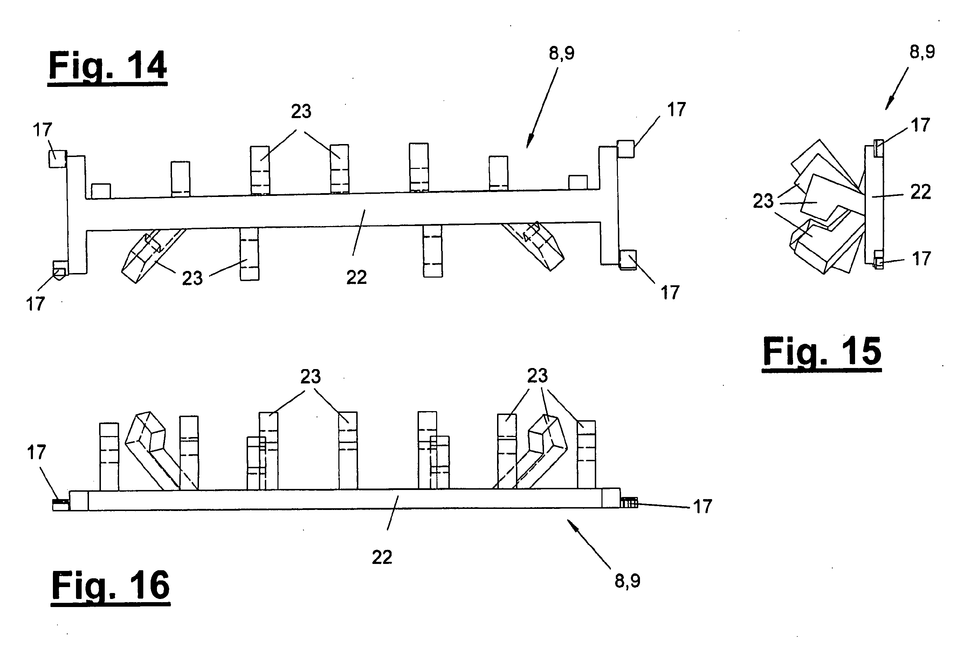

Der Träger (22) ist z.B. als torsions- und biegesteifer sowie kastenförmiger Hohlkörper ausgebildet. Die Spanner (23) können einzeln oder gruppenweise in beliebiger Ausrichtung und Position am Träger (22) starr oder mit einer Zusatzachse beweglich angeordnet sein. Vorzugsweise sind sie an der Trägervörderseite angeordnet. Figur 14 verdeutlicht in der Seitendarstellung, dass die Spanner (23) in ihrer Verteilung und Anordnung eine geweihartige Spannerkontur bilden können. Figur 15 zeigt in der geklappten Stirnansicht die Spannerausrichtung zur Karosserie. In Figur 1 bis 13 sind die Spanner (23) schematisch als Umrisslinie der gesamten Spannergruppe dargestellt.

Durch die schlanke Spannrahmenform sind unterschiedliche Positioniermöglichkeiten gegeben. In der Variante von Figur 11 ist ein einzelner schlanker Spannrahmen (8) mit seinem Träger (22) liegend und horizontal im oberen Bereich des Gestells (5) bzw. der stummelartigen Stützsäulen (6) angeordnet. Seine Spanner (23) dienen zum Spannen der oberen Karosseriebereiche. Unterhalb des Spannrahmens (8) können am Gestell (5), insbesondere an der Bodenplatte (7) weitere Spanner (24) angeordnet sein, die für den unteren Karosseriebereich oder Schwellerbereich vorgesehen sind und z.B. die Bodengruppe der Karosserie (3) mit der Seitenwand spannen. Die Spanner (24) können starr oder ein- oder mehrachsig verstellbar angeordnet sein. Sie können dabei ein oder mehrere eigene steuerbare lineare und/oder rotatorische Verstellachsen, z.B. in x-, y- und/oder z-Richtung haben, wie dies in Figur 11 angedeutet ist. Damit kann eine Feinpositionierung in Anpassung an wechselnde Fahrzeugtypen erreicht werden.

Die gezeigte Spannkonfiguration hat Vorteile für Karosserietypen, die z.B. im Bodengruppen- oder Schwellerbereich im wesentlichen die gleiche Form aufweisen und sich im oberen Karosseriebereich von Typ zu Typ unterscheiden. Derartige Typenunterschiede bestehen z.B. bei 2- oder 4-türigen Karosserievarianten oder Schrägheck- und Stufenheckvarianten oder dergl. der gleichen Fahrzeugbaureihe. In diesen Fällen ist bei einem Wechsel des Karosserietyps nur der Spannrahmen (8) auszutauschen. Die Spanngeometrie der unteren weiteren Spanner (24) kann dabei gleich bleiben oder in der vorerwähnten Weise angepasst, insbesondere zugestellt werden.

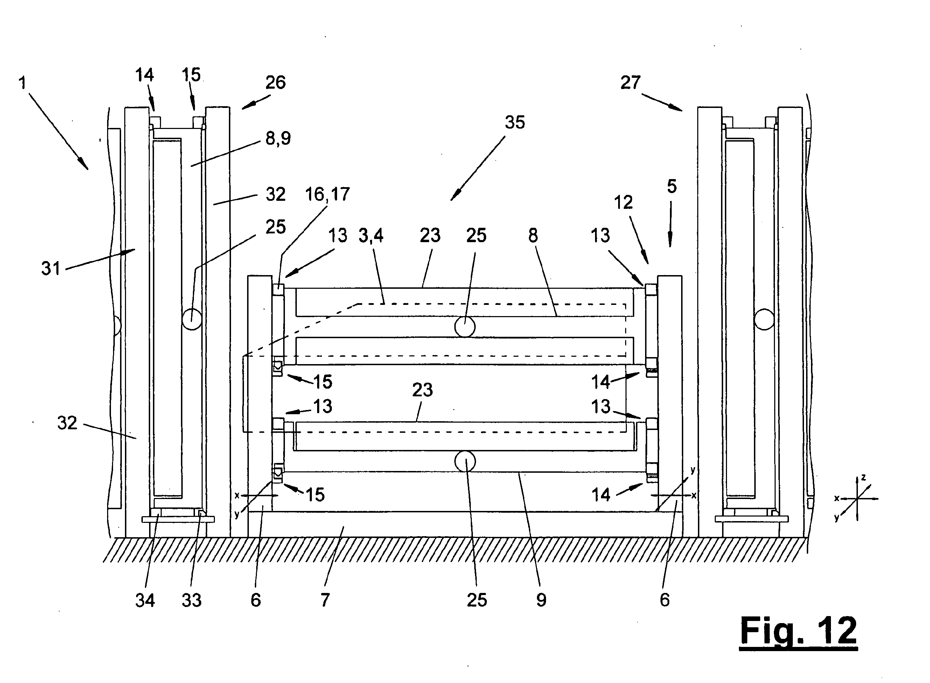

Figur 12 zeigt eine Abwandlung von Figur 11, bei der zwei schlanke Spannrahmen (8,9) übereinander im Gestell (5) positioniert sind. Der untere Spannrahmen (9) ersetzt die weiteren Spanner (24) und kann gemeinsam oder unabhängig vom oberen Spannrahmen (8) bei einem Typwechsel getauscht werden. In Variation zur gezeigten Ausführungsform können mehr als zwei Spannrahmen (8,9) übereinander angeordnet werden. In weiterer Abwandlung können mehrere Spannrahmen (8,9) alternativ oder zusätzlich nebeneinander im Gestell (5) positioniert werden.

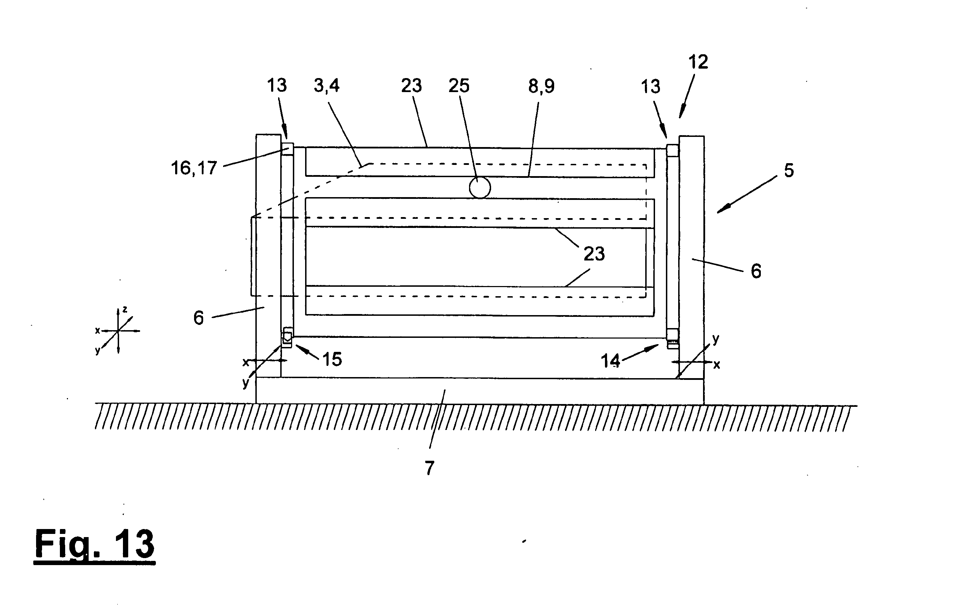

Figur 13 zeigt eine Variante der Spannrahmen (8,9) in einer breiteren Ausführung, die z.B. für kleine Fahrzeuge geeignet ist. In diesem Fall sind mehrere horizontal ausgerichtete Träger oder Rahmenteile mit endseitigen Rahmenverbindungen vorgesehen. Hierdurch kann z.B. ein in der Seitenansicht rechteckiger umlaufender Rahmen gebildet werden. Die Dockingeinrichtung (25) ist auch hier an geeigneter Stelle und vorzugsweise mittig sowie an der Rahmenrückseite angeordnet. Der größere Spannrahmen (8,9) von Figur 13 ist z.B. in der Lage, die komplette Seitenwand (4) der Karosserie (3) zu spannen. Ein solcher Spannrahmen (8,9) eignet sich auch besonders für eine Bauteilzuführung bei der Rahmenzustellung bzw. beim Rahmenwechsel.

Die Positioniereinrichtung (12) dient zur exakten Positionierung der Spannrahmen (8,9) am Gestell (5). Sie bietet ein oder mehrere Zentrierungen (13,14,15). Außerdem ist eine Fixiereinrichtung (nicht dargestellt) vorhanden, mit der die eingenommene Rahmenposition gesichert werden kann. Dies kann z.B. ein steuerbarer Spannhebel oder dergl. sein. Wie Figur 11 bis 13 beispielhaft verdeutlichen, sind für jeden Spannrahmen (8,9) vier Zentrierungen (13,14,15) vorhanden. Die beiden oberen y-Zentrierungen (13) wirken in Richtung der Y-Achse und quer zur Transferlinie (2). Die eine untere Zentrierung ist als x,y,z-Zentrierung mit Wirkung in allen drei Raumachsen X,Y,Z ausgebildet. Auf der gegenüberliegenden Seite an der anderen Stützsäule (6) ist eine x,y-Zentrierung (14) an der Rahmenunterseite angeordnet. Über die Zentrierungen (13,14,15) ist eine Positionierung in allen sechs translatorischen und rotatorischen Achsen möglich.

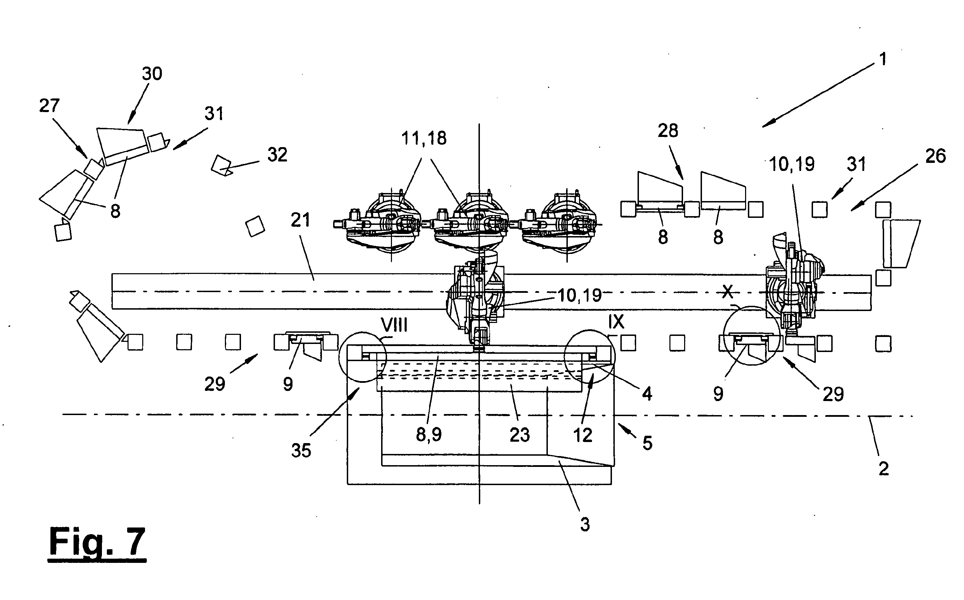

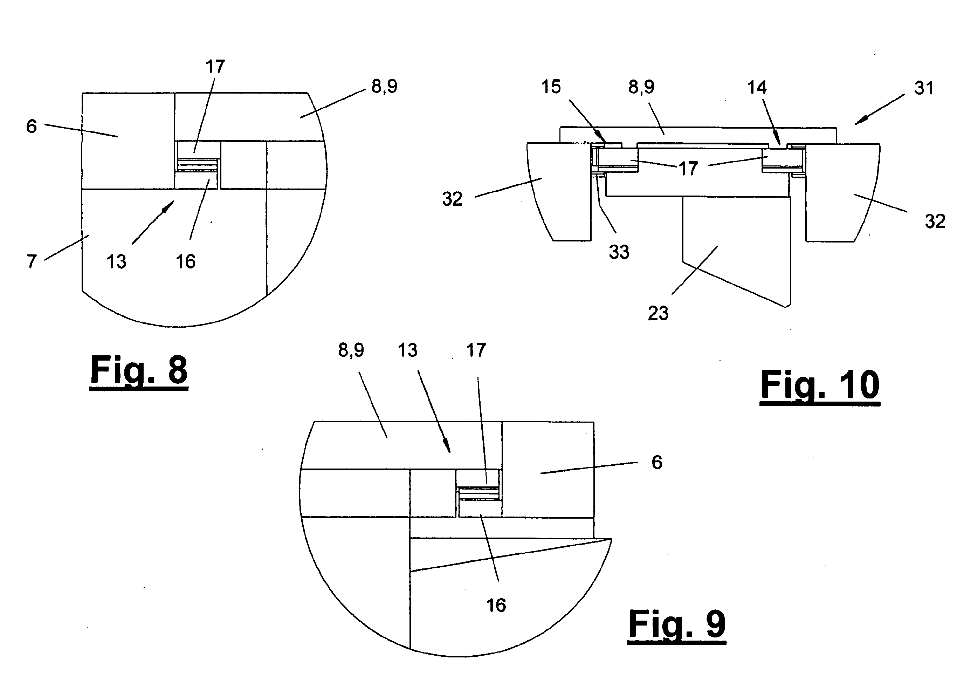

Zur Bildung der Zentrierungen (13,14,15) sind jeweils zusammenwirkende Zentrierelemente (16) am Gestell und insbesondere an den Stützsäulen (6) sowie Zentrierelemente (17) an den Spannrahmen (8,9) vorhanden. Figur 8 und 9 zeigen als vergrößerte Ausschnitte zu Figur 7 Detaildarstellungen des Zentrierelementes (16,17) und der y-Zentrierungen (13).

In Figur 1 bis 7 sind verschiedene Varianten der Rahmenmagazine (26,27) dargestellt. Die Rahmenmagazine (26,27) können beidseits der Arbeitsstelle (35) angeordnet und identisch oder unterschiedlich ausgebildet sein. Sie können alternativ auch nur auf einer Stationsseite sich befinden. Bei einer doppelseitigen Stationsausbildung können vier oder weniger Rahmenmagazine (26,27) vorhanden sein.

Die Rahmenmagazine (26,27) weisen jeweils mehrere Rahmenhalter (31) auf, die vorzugsweise für eine aufrechte Spannrahmenlage und Speicherung konzipiert sind. Die Rahmenhalter (31) sind in den gezeigten Ausführungsformen stationär angeordnet und bestehen jeweils aus zwei vertikalen Tragsäulen (32) mit Stützelementen (33) für die Spannrahmen (8,9). Zum Einlagern werden die z.B. länglichen Spannrahmen (8,9) vom Handlingroboter (19) aus ihrer horizontalen Arbeitsstellung nach der Abnahme vom Gestell (5) um ca. 90° gedreht und mit einer im wesentlichen vertikalen Ausrichtung an die Rahmenhalter (31) übergeben, in denen sie stehend oder hängend gehalten werden können. Die Stützelemente (33) an den Tragsäulen (32) können an die Zentrierelemente (17) der Spannrahmen (8,9) oder an andere Spannrahmenteile angepasst sein und für eine exakte Spannrahmenpositionierung im Rahmenhalter (31) sorgen. Hierfür können z.B. die in Figur 11 im oberen Spannrahmenbereich dargestellten Zentrierungen (14,15) sorgen. An der Rahmenunterseite können Anschläge (34), z.B. y-Anschläge vorhanden sein. Durch die exakte Positionierung können die Spannrahmen (8,9) vom Handlingroboter (19) in definierter Lage gegriffen und aufgenommen oder abgegeben werden.

Figur 1 bis 5 verdeutlichen eine Magazinausbildung, in der ein Teil der Rahmenhalter (31) in ein oder mehreren Reihen auf ein oder beiden Seiten der zusätzlichen Bewegungsachse (21) in einer achsparallelen Lage angeordnet sind. Benachbarte Rahmenhalter (31) können gemeinsame Tragsäulen (32) haben. Alternativ oder zusätzlich ist es möglich, mehrere Rahmehalter (31) in einem Bogen anzuordnen. Eine solche Anordnung kann sich z.B. am Endbereich der zusätzlichen Bewegungsachse (21) befinden.

In den Magazinen (26,27) kann durch die platzsparende Gestaltung eine Vielzahl von Lagerplätzen für die unterschiedlichen Spannrahmen (8,9) gebildet werden. Hierbei können die Magazine (26,27) auch in Magazinbereiche (28,29,30) unterteilt werden, in denen untereinander gleichartige Spannrahmen (8,9) angeordnet sind. Figur 7 zeigt beispielhaft eine solche Anordnung. Im Rahmenbereich (28) sind Spannrahmen (8) untergebracht, die z.B. gemäß Figur 12 für den oberen Karosseriebereich vorgesehen sind. Diese schmalen Spannrahmen (8) sind in reihenförmig angeordneten Rahmenhaltern (31) aufgenommen. Untereinander unterscheiden sich die Spannrahmen (8) hinsichtlich des Karosserietyps und der hierfür vorgesehenen Spannergeometrie. Im anderen Magazinbereich (29), der aus einer Reihenanordnung von Rahmenhaltern (31) auf der anderen Seite der zusätzlichen Bewegungsachse (21) besteht, sind die anderen schmalen Spannrahmen (9) aufgenommen, die gemäß Figur 12 für den Schwellerbereich vorgesehen sind. Im dritten Magazinbereich (30), der z.B. eine bogenförmige Anordnung von Rahmenhaltern (31) zeigt, sind größere Spannrahmen (8) aufgenommen, die z.B. der Variante von Figur 13 entsprechen.

Abwandlungen der gezeigten und beschriebenen Ausführungsformen sind im Rahmen der Ansprüche in verschiedener Weise möglich. Zum einen können die Gestaltungsmerkmale der verschiedenen Ausführungsformen beliebig untereinander vertauscht oder kombiniert werden. Ferner ist es möglich, bei kleineren Bearbeitungsstationen (1) mit nur einem Manipulator oder Handlingroboter (19) auszukommen. Ferner sind andere Magazinformen möglich, die auch Bewegungsachsen haben können, z.B. in der Ausbildung als Trommelmagazin. In die Magazine (26,27) oder an anderer Stelle der Bearbeitungsstation (1) kann außerdem eine Bauteilzuführung (nicht dargestellt) integriert sein, mit der Bauteile (4) von außen zugeführt und an die Spannrahmen (8,9) für eine gemeinsame Zustellung an der Arbeitsstelle (35) übergeben werden. Ferner kann das Gestell (5) in anderer Weise ausgebildet sein. Variationsfähig sind auch die anderen Stationskomponenten, insbesondere die Bearbeitungseinrichtung (11).

### BEZUGSZEICHENLISTE

- 1: Bearbeitungsstation, Fügestation
- 2: Transferlinie
- 3: Werkstück, Karosserie
- 4: Bauteil, Seitenwand
- 5: Gestell
- 6: Stützsäule
- 7: Tragelement, Bodenplatte
- 8: Spannrahmen
- 9: Spannrahmen
- 10: Rahmenwechseleinrichtung
- 11: Bearbeitungseinrichtung
- 12: Positioniereinrichtung
- 13: Zentrierung, y-Zentrierung
- 14: Zentrierung, y,z-Zentrierung
- 15: Zentrierung, x,y,z-Zentrierung
- 16: Zentrierelement an Gestell
- 17: Zentrierelement an Spannrahmen
- 18: Manipulator, Fügeroboter
- 19: Manipulator, Handlingroboter
- 20: Manipulatorhand, Roboterhand
- 21: Bewegungsachse, Fahrachse
- 22: Träger
- 23: Spanner an Spannrahmen
- 24: Spanner an Gestell
- 25: Dockingeinrichtung
- 26: Rahmenmagazin
- 27: Rahmenmagazin
- 28: Magazinbereich
- 29: Magazinbereich
- 30: Magazinbereich
- 31: Rahmenhalter
- 32: Säule
- 33: Stützelement
- 34: Anschlag, y-Anschlag
- 35: Arbeitsstelle

## Patentansprüche

1. Bearbeitungsstation, insbesondere Fügestation, für Werkstücke (3) von Fahrzeugkarosserien, wobei die Bearbeitungsstation (1) ein Gestell (5) mit mindestens einer Arbeitsstelle (35), mehrere Spannrahmen (8,9), mindestens ein Rahmenmagazin (26,27), eine Rahmenwechseleinrichtung (10) und eine Bearbeitungseinrichtung (11) für die Werkstücke (3) aufweist, wobei die Rahmenwechseleinrichtung (10) ein oder mehrere mehrachsige Manipulatoren (19) aufweist, wobei die Spannrahmen (8,9) eine Dockingeinrichtung (25) zur lösbaren Verbindung mit dem Manipulator (19) besitzen und wobei eine Positioniereinrichtung (12) zur Positionierung und Fixierung der Spannrahmen (8,9) am Gestell (5) vorgesehen ist, wobei der Manipulator (19) eine zusätzliche Bewegungsachse (21), insbesondere eine Fahrachse, für seinen Transport zwischen der Arbeitsstelle (35) und dem Rahmenmagazin (26,27) aufweist, **dadurch gekennzeichnet, dass** die Bewegungsachse (21) zwischen der Bearbeitungseinrichtung (11) und der Arbeitsstelle (35) angeordnet ist.

2. Bearbeitungsstation nach Anspruch 1, **dadurch gekennzeichnet, dass** der Manipulator (19) als Gelenkarmroboter mit sechs oder mehr Achsen ausgebildet ist und eine mehrachsige Roboterhand (20) mit einer Wechselkupplung aufweist.

3. Bearbeitungsstation nach Anspruch 1 oder 2, **dadurch gekennzeichnet, dass** die Bearbeitungseinrichtung (11) ein oder mehrere mehrachsige Manipulatoren (18), insbesondere Fügeroboter, aufweist.

4. Bearbeitungsstation nach Anspruch 1, 2 oder 3, **dadurch gekennzeichnet, dass** die Spannrahmen (8,9) eine längliche schmale Form aufweisen.

5. Bearbeitungsstation nach einem der vorhergehenden Ansprüche, **dadurch gekennzeichnet, dass** die Spannrahmen (8,9) einen balkenartigen Träger (22) mit ein oder mehreren Spannern (23) aufweisen.

6. Bearbeitungsstation nach Anspruch 5, **dadurch gekennzeichnet, dass** der Träger (22) im wesentlichen eine I-Form aufweist.

7. Bearbeitungsstation nach einem der vorhergehenden Ansprüche, **dadurch gekennzeichnet, dass** die Spannrahmen (8,9) am Gestell (5) mit im wesentlichen horizontaler Ausrichtung positionierbar sind.

8. Bearbeitungsstation nach einem der vorhergehenden Ansprüche, **dadurch gekennzeichnet, dass** mehrere Spannrahmen (8,9) am Gestell (5) übereinander und/oder nebeneinander positionierbar sind.

9. Bearbeitungsstation nach einem der vorhergehenden Ansprüche, **dadurch gekennzeichnet, dass** das Gestell (5) ein oder mehrere frei stehende Stützsäulen (6) aufweist.

10. Bearbeitungsstation nach Anspruch 9, **dadurch gekennzeichnet, dass** die Stützsäulen (6) verstellbar an einem Tragelement (7), insbesondere einer Bodenplatte, angeordnet sind.

11. Bearbeitungsstation nach Anspruch 10, **dadurch gekennzeichnet, dass** am Gestell (5), insbesondere am Tragelement (7), ein oder mehrere Spanner (24) angeordnet sind.

12. Bearbeitungsstation nach Anspruch 11, **dadurch gekennzeichnet, dass** die weiteren Spanner (24) ein oder mehrere Verstellachsen aufweisen.

13. Bearbeitungsstation nach Anspruch 10 oder 11, **dadurch gekennzeichnet, dass** die weiteren Spanner (24) unterhalb des Spannrahmens (8) angeordnet sind.

14. Bearbeitungsstation nach einem der vorhergehenden Ansprüche, **dadurch gekennzeichnet, dass** die Dockingeinrichtung (25) als Energie- und Wechselkupplung ausgebildet ist.

## Claims

1. Machining station, in particular joining station, for workpieces (3) of vehicle bodies, wherein the machining station (1) has a stand (5) with at least one operating location (35), and also has a plurality of clamping frames (8, 9), at least one frame magazine (26, 27), a frame-changeover device (10) and a machining device (11) for the workpieces (3), wherein the frame-changeover device (10) has one or more multi-axis manipulators (19), wherein the clamping frames (8, 9) have a docking device (25) for releasable connection to the manipulator (19), and wherein a positioning device (12) is provided for positioning and fixing the clamping frames (8, 9) on the stand (5), wherein the manipulator (19) has an additional movement axis (21), in particular a travelling axis, for transporting between the operating location (35) and the frame magazine (26, 27), **characterized in that** the movement axis (21) is arranged between the machining device (11) and the operating location (35).

2. Machining station according to Claim 1, **characterized in that** the manipulator (19) is designed in the form of an articulated-arm robot with six or more axes and has a multi-axis robot hand (20) with a changeover coupling.

3. Machining station according to Claim 1 or 2, **characterized in that** the machining device (11) has one or more multi-axis manipulators (18), in particular joining robots.

4. Machining station according to Claim 1, 2 or 3, **characterized in that** the clamping frames (8, 9) are of elongate narrow form.

5. Machining station according to one of the preceding claims, **characterized in that** the clamping frames (8, 9) have a beam-like carrier (22) with one or more clamps (23).

6. Machining station according to Claim 5, **characterized in that** the carrier (22) is essentially in the form of an I.

7. Machining station according to one of the preceding claims, **characterized in that** the clamping frames (8, 9) can be positioned on the stand (5) in an essentially horizontally oriented manner.

8. Machining station according to one of the preceding claims, **characterized in that** a plurality of clamping frames (8, 9) can be positioned on the stand (5) one above the other and/or one beside the other.

9. Machining station according to one of the preceding claims, **characterized in that** the stand (5) has one or more free-standing supporting columns (6).

10. Machining station according to Claim 9, **characterized in that** the supporting columns (6) are arranged in an adjustable manner on a carrying element (7), in particular a baseplate.

11. Machining station according to Claim 10, **characterized in that** one or more clamps (24) are arranged on the stand (5), in particular on the carrying element (7).

12. Machining station according to Claim 11, **characterized in that** the further clamps (24) have one or more adjustment axes.

13. Machining station according to Claim 10 or 11, **characterized in that** the further clamps (24) are arranged beneath the clamping frame (8).

14. Machining station according to one of the preceding claims, **characterized in that** the docking device (25) is designed in the form of a power and changeover coupling.

## Revendications

1. Poste de traitement, en particulier poste d'assemblage pour des pièces (3) de carrosseries de véhicules, le poste de traitement (1) présentant un bâti (5) avec au moins une zone de travail (35), plusieurs cadres de serrage (8, 9), au moins un magasin de cadres (26, 27), un dispositif de changement de cadre (10) et un dispositif de traitement (11) pour les pièces (3), le dispositif de changement de cadre (10) présentant un ou plusieurs manipulateurs à plusieurs axes (19), les cadres de serrage (8, 9) possédant un dispositif d'arrimage (25) pour la connexion détachable au manipulateur (19) et un dispositif de positionnement (12) étant prévu pour positionner et fixer les cadres de serrage (8, 9) au bâti (5), le manipulateur (19) présentant un axe de déplacement supplémentaire (21), en particulier un axe de conduite pour son transport entre la zone de travail (35) et le magasin de cadre (26, 27), **caractérisé en ce que** l'axe de déplacement (21) est disposé entre le dispositif de traitement (11) et la zone de travail (35).

2. Poste de traitement selon la revendication 1, **caractérisé en ce que** le manipulateur (19) est réalisé sous forme de robot à bras articulés ayant six ou plus de six axes et présente une main de robot à plusieurs axes (20) avec un accouplement variable.

3. Poste de traitement selon la revendication 1 ou 2,
**caractérisé en ce que**
le dispositif de traitement (11) présente un ou plusieurs manipulateurs à plusieurs axes (18), en particulier des robots d'assemblage.

4. Poste de traitement selon la revendication 1, 2 ou 3,
**caractérisé en ce que**
les cadres de serrage (8, 9) présentent une forme étroite allongée.

5. Poste de traitement selon l'une quelconque des revendications précédentes, **caractérisé en ce que** les cadres de serrage (8, 9) présentent un support de type poutre (22) avec une ou plusieurs pinces (23).

6. Poste de traitement selon la revendication 5, **caractérisé en ce que** le support (22) présente essentiellement une forme en I.

7. Poste de traitement selon l'une quelconque des revendications précédentes, **caractérisé en ce que** les cadres de serrage (8, 9) peuvent être positionnés sur le bâti (5) avec une orientation essentiellement horizontale.

8. Poste de traitement selon l'une quelconque des revendications précédentes, **caractérisé en ce que** plusieurs cadres de serrage (8, 9) peuvent être positionnés sur le bâti (5) les uns au-dessus des autres et/ou les uns à côté des autres.

9. Poste de traitement selon l'une quelconque des revendications précédentes, **caractérisé en ce que** le bâti (5) présente une ou plusieurs colonnes de support (6) autoportantes.

10. Poste de traitement selon la revendication 9, **caractérisé en ce que** les colonnes de support (6) sont disposées de manière déplaçable sur un élément de support (7), en particulier une plaque de base.

11. Poste de traitement selon la revendication 10, **caractérisé en ce qu'**une ou plusieurs pinces (24) sont disposées sur le bâti (5), notamment sur l'élément de support (7).

12. Poste de traitement selon la revendication 11, **caractérisé en ce que** les autres pinces (24) présentent un ou plusieurs axes de déplacement.

13. Poste de traitement selon la revendication 10 ou 11, **caractérisé en ce que** les autres pinces (24) sont disposées sous le cadre de serrage (8).

14. Poste de traitement selon l'une quelconque des revendications précédentes, **caractérisé en ce que** le dispositif d'arrimage (25) est réalisé sous forme de coupleur de puissance et d'accouplement variable.
